(19)

Europäisches Patentamt

European Patent Office

Office européen des brevets

(11)  **EP 4 746 377 A1**

(12)  **EUROPEAN PATENT APPLICATION**
published in accordance with Art. 153(4) EPC

(43) Date of publication:
**20.05.2026  Bulletin 2026/21**

(21) Application number: **24861809.2**

(22) Date of filing: **16.08.2024**

(51) International Patent Classification (IPC):
**H04L 65/80** (2022.01)

(52) Cooperative Patent Classification (CPC):
**H04L 65/65; H04L 65/752; H04L 65/80; H04N 13/194**

(86) International application number:
**PCT/CN2024/112884**

(87) International publication number:
**WO 2025/050965 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023  CN 202311138992**

(71) Applicants:
• **Huawei Technologies Co., Ltd.**
  **Shenzhen, Guangdong 518129 (CN)**
• **Dalian University of Technology**
  **Dalian, Liaoning 116024 (CN)**

(72) Inventors:
• **XU, Rui**
  **Shenzhen, Guangdong 518129 (CN)**
• **QIN, Yi**
  **Shenzhen, Guangdong 518129 (CN)**
• **LIU, Qian**
  **Dalian, Liaoning 116024 (CN)**
• **CHEN, Junru**
  **Dalian, Liaoning 116024 (CN)**

(74) Representative: **Thun, Clemens**
**Mitscherlich PartmbB**
**Karlstraße 7**
**80333 München (DE)**

(54)  **HAPTIC EVALUATION METHOD AND DEVICE**

(57)  A haptic evaluation method and apparatus are provided. The method includes: obtaining an application-layer parameter and a network-side parameter of a target service, where the application-layer parameter includes haptic information of the target service, and the network-side parameter includes at least one of a delay, reliability, or jitter of the target service; and determining a haptic evaluation indicator of the target service based on the application-layer parameter and the network-side parameter, where the haptic evaluation indicator is used to evaluate quality of haptic experience of a user for the target service. According to the haptic evaluation method and apparatus in embodiments of this application, time and labor costs can be reduced, and accuracy of haptic evaluation can be improved.

300

```
Obtain an application-layer parameter and a network-side
parameter of a target service, where the application-layer
parameter includes haptic information of the target
service, and the network-side parameter includes at least
one of a delay, reliability, or jitter of the target service
```
S301

```
Determine a haptic evaluation indicator of the target
service based on the application-layer parameter and the
network-side parameter, where the haptic evaluation
indicator is used to evaluate quality of haptic experience
of a user for the target service
```
S302

FIG. 3

EP 4 746 377 A1

**Description**

This application claims priority to Chinese Patent Application No. 202311138992.X, filed with the China National Intellectual Property Administration on September 4, 2023 and entitled "HAPTIC EVALUATION METHOD AND APPARATUS", which is incorporated herein by reference in its entirety.

**TECHNICAL FIELD**

This application relates to the communication field, and more specifically, to a haptic evaluation method and apparatus.

**BACKGROUND**

In recent years, with the continuous development of a communication system, a data transmission delay is continuously reduced, and a transmission capacity is larger. Some multimedia services with high real-time performance and a high data capacity requirement, such as video transmission, cloud gaming (cloud gaming), and extended reality (extended reality, XR), are emerging in the communication system, where the XR includes virtual reality (virtual reality, VR) and augmented reality (augmented reality, AR). As a new service, a multi-modal service is added with a haptic experience dimension based on the XR, so that remote touch and remote control can be implemented, and remote sensing in a plurality of aspects such as vision, hearing, haptics, and kinesthesia can be implemented.

In a haptic internet, quality of haptic experience of a user in a human-computer interaction process may be evaluated by using a haptic evaluation indicator. An existing haptic evaluation indicator includes a subjective evaluation indicator and an objective evaluation indicator. The subjective evaluation indicator may be, for example, quality of user experience (quality of user experience, QoE), and the objective evaluation indicator may be, for example, a perceptual mean square error (perceptual mean square error, P-MSE), a haptic perceptually weighted peak signal-to-noise ratio (haptic perceptually weighted peak signal-to-noise ratio, HPW-PSNR), or a haptic structural similarity (haptic structural similarity, HSSIM).

The objective evaluation indicator cannot accurately reflect real feeling of a person, causing low accuracy. The subjective evaluation indicator needs to be measured by bringing together a large quantity of participants to take a related test and give a mean opinion score (mean opinion score, MOS). For different scenarios and tasks, the test needs to be repeatedly taken, which is time-consuming and labor-intensive. Consequently, costs are high, and a scoring standard varies between individuals.

**SUMMARY**

This application provides a haptic evaluation method and apparatus, to reduce time and labor costs, and improve accuracy of haptic evaluation.

According to a first aspect, a haptic evaluation method is provided, and includes: obtaining an application-layer parameter and a network-side parameter of a target service, where the application-layer parameter includes haptic information of the target service, and the network-side parameter includes at least one of a delay, reliability, or jitter of the target service; and determining a haptic evaluation indicator of the target service based on the application-layer parameter and the network-side parameter, where the haptic evaluation indicator is used to evaluate quality of haptic experience of a user for the target service.

In the haptic evaluation method in this embodiment of this application, an application-layer parameter and a network-side parameter of a target service are obtained, to determine a haptic evaluation indicator of the target service based on the application-layer parameter and the network-side parameter. In comparison with an existing objective evaluation indicator, because the application-layer parameter includes haptic information of the target service, the haptic evaluation indicator determined in this manner can more accurately reflect real feeling of a person, so that accuracy of haptic evaluation can be improved. In comparison with an existing subjective evaluation indicator, because different services correspond to different haptic information, in the haptic evaluation method in this application, a haptic evaluation result corresponding to a current scenario or a current task can be obtained without a manual operation, so that time and labor costs can be reduced.

It should be understood that the "obtaining" may include obtaining from another device (for example, a core network device or a terminal device), or may include obtaining from inside an access network device (for example, obtaining from a memory of the access network device). This is not limited in this embodiment of this application.

Optionally, the target service in this embodiment of this application may include only a haptic service, or may include a video service in addition to the haptic service.

Optionally, when the target service includes the haptic service and the video service, the application-layer parameter further includes video media information of the target service.

With reference to the first aspect, in some implementations of the first aspect, the obtaining the application-layer parameter of the target service includes: receiving first information from the core network device, where the first information includes the application-layer parameter.

It should be understood that the application-layer parameter included in the first information is an application-layer parameter of an application server. The application server may send third information including the application-layer parameter to the core network device through an N6 interface. The core network device receives the third information, extracts the application-layer parameter from the third information, includes the application-layer parameter in the first information, and forwards the first information to the access network device through an N3 interface. Correspondingly, the access network device receives the first information including the application-layer parameter.

For example, in a process in which the application server sends the application-layer parameter to the core network device, a field that carries the application-layer parameter may be located at a real-time transport protocol (real-time transport protocol, RTP) layer (for example, located in an RTP header of the RTP layer), or located at a user datagram protocol (user datagram protocol, UDP) layer (for example, located in a UDP header of the UDP layer), or located at a newly added protocol layer between the RTP layer and the UDP layer, or may be a newly added field between the RTP layer and the UDP layer. This is not limited in this embodiment of this application.

For example, in a process in which the core network device sends the application-layer parameter to the access network device, a field that carries the application-layer parameter may be an extension header of a GPRS tunneling protocol-user plane (user GPRS tunnel protocol, GTP-U, where a GPRS is short for a general packet radio service (general packet radio service, GPRS)) packet, that is, the first information may be the GTP-U packet.

With reference to the first aspect, in some implementations of the first aspect, the obtaining the application-layer parameter of the target service includes: receiving second information from the terminal device, where the second information includes the application-layer parameter.

It should be understood that the application-layer parameter included in the first information is an application-layer parameter of the terminal device. The terminal device may send the second information including the application-layer parameter to the access network device through a Uu interface.

With reference to the first aspect, in some implementations of the first aspect, the second information is carried in radio resource control RRC signaling, a media access control control element MAC CE, or uplink control information UCI.

With reference to the first aspect, in some implementations of the first aspect, the application-layer parameter includes the application-layer parameter from the application server and/or the application-layer parameter from the terminal device. The determining the haptic evaluation indicator of the target service based on the application-layer parameter and the network-side parameter includes: determining the haptic evaluation indicator based on the application-layer parameter from the application server and/or the application-layer parameter from the terminal device and the network-side parameter.

In a possible implementation, the access network device may determine the haptic evaluation indicator of the target service based on the application-layer parameter from the application server and the network-side parameter. In another possible implementation, the access network device may determine the haptic evaluation indicator of the target service based on the application-layer parameter from the terminal device and the network-side parameter. In still another possible implementation, the access network device may determine the haptic evaluation indicator based on the application-layer parameter from the application server, the application-layer parameter from the terminal device, and the network-side parameter.

With reference to the first aspect, in some implementations of the first aspect, the haptic evaluation indicator is obtained by performing weighted summation on a first value and/or a second value and a third value, the first value is a value obtained by inputting, into a first function, the application-layer parameter from the application server, the second value is a value obtained by inputting, into a second function, the application-layer parameter from the terminal device, and the third value is a value obtained by inputting the network-side parameter into a third function.

With reference to the first aspect, in some implementations of the first aspect, the target service includes the haptic service and the video service, the network-side parameter includes a network-side parameter corresponding to the haptic service and a network-side parameter corresponding to the video service, and the application-layer parameter further includes the video media information. The determining the haptic evaluation indicator of the target service based on the application-layer parameter and the network-side parameter includes: determining the haptic evaluation indicator based on the haptic information, the network-side parameter corresponding to the haptic service, the video media information, the network-side parameter corresponding to the video service, and a synchronization error between the haptic service and the video service.

With reference to the first aspect, in some implementations of the first aspect, the haptic evaluation indicator is obtained by performing weighted summation on a fourth value, a fifth value, and the synchronization error, the fourth value is a value obtained by inputting, into a fourth function, the haptic information and the network-side parameter corresponding to the haptic service, and the fifth value is a value obtained by inputting, into a fifth function, the video information and the network-side parameter corresponding to the video service.

With reference to the first aspect, in some implementations of the first aspect, the determining the haptic evaluation indicator of the target service based on the application-layer parameter and the network-side parameter includes: inputting the application-layer parameter and the network-side parameter into a trained neural network model, to obtain the haptic evaluation indicator.

In this embodiment of this application, the trained neural network model may be considered as a black-box system, and may be obtained by training models including but not limited to a GBDT, an SVM, a random forest, and the like. In this manner, prediction may be performed on subjective perception quality of given haptic experience. In other words, if the application-layer parameter and the network-side parameter are given, the haptic evaluation indicator may be obtained through prediction.

With reference to the first aspect, in some implementations of the first aspect, the method further includes: collecting, when the application-layer parameter of the target service is a different parameter and/or the network-side parameter of the target service is a different parameter, a plurality of scores of each of a plurality of users for the target service, and an application-layer parameter and/or a network-side parameter corresponding to each of the plurality of scores; and inputting, into a neural network model by using the plurality of scores as tags, the application-layer parameter and/or the network-side parameter corresponding to each of the plurality of scores, and training the neural network model to obtain the trained neural network model.

Optionally, the access network device may train and store a plurality of (for example, more than 10) models. In a possible implementation, the access network device may separately perform prediction by using the plurality of stored models, then calculate a mean value of prediction results of all of the plurality of models and use the mean value as a final prediction value, that is, the haptic evaluation indicator of the target service. This helps improve stability and accuracy of the prediction result.

In this embodiment of this application, the haptic evaluation indicator is determined through calculation by a neural network, and a subjective evaluation score of the user is collected by causing the user to adjust an application-layer parameter value and/or a network-side parameter value, which is closer to real user experience. Training is performed based on the dataset, so that accuracy of an evaluation indicator of perception quality of haptic experience can be effectively improved.

With reference to the first aspect, in some implementations of the first aspect, the haptic information includes at least one of the following: vibration time, vibration intensity, haptic compressibility, key parameter for haptic coding, force feedback intensity, or interaction intensity.

It should be understood that the interaction intensity may refer to a closeness degree of human-computer interaction, and is related to dynamicity and complexity of a human-computer interaction environment. The haptic compressibility may be a ratio of a compressed data volume to an original data volume, or may be a ratio of an original data volume to a compressed data volume, or may be in a form of a percentage. However, this is not limited in this embodiment of this application. With reference to the first aspect, in some implementations of the first aspect, the application-layer parameter further includes the video media information, and the video media information includes at least one of the following: a frame rate, a periodicity, or information about a protocol data unit PDU set (set). It should be understood that the information about the PDU set may include information such as a serial number of the PDU set, an end identifier of the PDU set, a serial number of a PDU in the PDU set, an importance identifier of the PDU set, and a size of the PDU set. This is not specifically limited in this embodiment of this application.

According to a second aspect, a haptic evaluation apparatus is provided, and is configured to perform the method according to any one of the possible implementations of the first aspect. Specifically, the apparatus includes a module configured to perform the method according to any one of the possible implementations of the first aspect.

According to a third aspect, a haptic evaluation apparatus is provided, and includes a processor and a memory communicatively connected to the processor, where the memory stores computer-executable instructions, and the processor executes the computer-executable instructions stored in the memory, to implement the method according to any one of the possible implementations of the first aspect.

In an implementation, the haptic evaluation apparatus is an access network device. When the haptic communication apparatus is the access network device, a communication interface may be a transceiver or an input/output interface.

In another implementation, the haptic evaluation apparatus is a chip disposed in the access network device.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process, for example, sending of indication information, may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus according to the third aspect may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor, and exists independently.

According to a fourth aspect, a computer-readable storage medium is provided. The computer-readable storage medium stores computer-executable instructions. When executed by a processor, the computer-executable instructions are used to implement the method according to any one of the possible implementations of the first aspect.

According to a fifth aspect, a computer program product is provided. When instructions are run on a computer, the computer is enabled to implement the method according to any one of the possible implementations of the first aspect.

## BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a schematic flowchart of a haptic evaluation method according to an embodiment of this application;
FIG. 4 is a schematic flowchart of a haptic evaluation method according to an embodiment of this application;
FIG. 5 is a block diagram of a haptic evaluation apparatus according to an embodiment of this application; and
FIG. 6 is a block diagram of another haptic evaluation apparatus according to an embodiment of this application.

## DESCRIPTION OF EMBODIMENTS

The following describes the technical solutions in this application with reference to the accompanying drawings.

For ease of clearly describing the technical solutions in embodiments of this application, in embodiments of this application, terms such as "first" and "second" are used to distinguish between same items or similar items whose functions and roles are basically the same. A person skilled in the art may understand that the terms such as "first" and "second" do not limit a quantity or an execution sequence, and the terms such as "first" and "second" do not indicate a definite difference.

It should be noted that, in this application, the term "example", "for example", or the like is used to represent giving an example, an illustration, or a description. Any embodiment or design scheme described as an "example" or "for example" in this application should not be construed as being more preferred or more advantageous than another embodiment or design scheme. Exactly, use of the term "example", "for example", or the like is intended to present a related concept in a specific manner.

In addition, "at least one" means one or more, and "a plurality of" means two or more. "And/Or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, or b, or c, or a and b, or a and c, or b and c, or a, b, and c, where a, b, and c may be single or may be plural.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future evolved communication system, for example, a 6th generation (6th generation, 6G) system.

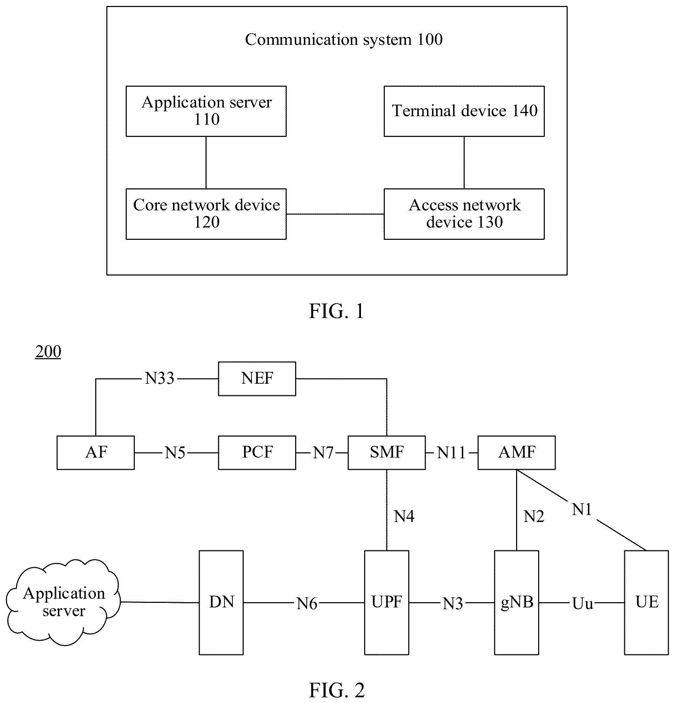

FIG. 1 is a diagram of a communication system 100 to which an embodiment of this application is applied. As shown in FIG. 1, the communication system 100 includes an application server 110, a core network device 120, an access network device 130, and a terminal device 140.

The application server 110 is configured to perform operations such as encoding, decoding, and rendering on service data, and transmit the service data to the terminal device 140 via a network side. The network side includes the core network device 120 and the access network device 130. The core network device 120 may be connected to the access network device 130 in a wireless or wired manner. The terminal device 140 may be connected to the access network device 130 in a wireless manner within a coverage range of the access network device 130.

The access network device 130 may communicate with the terminal device 140 through a radio link. A plurality of antennas may be configured for the access network device 130 or the terminal device 140. The plurality of antennas may include at least one transmit antenna configured to send a signal and at least one receive antenna configured to receive a signal. In addition, the access network device 130 or the terminal device 140 may additionally include a transmitter chain and a receiver chain. A person of ordinary skill in the art may understand that both the transmitter chain and the receiver chain may include a plurality of components (for example, processors, modulators, multiplexers, demodulators, demultiplexers, or antennas) related to signal sending and receiving. Therefore, the access network device 130 and the terminal device 140 may communicate with each other by using a multi-antenna technology.

It should be understood that FIG. 1 is merely a diagram. The communication system 100 may further include other network devices, for example, a wireless relay device and a wireless backhaul device, which are not shown in FIG. 1. Quantities of core network devices, access network devices, and terminal devices included in the communication system 100 are not limited in embodiments of this application.

The access network device and the core network device in embodiments of this application may be collectively referred to as network devices.

The core network device in embodiments of this application may be a core network device in a 4G system, for example, a mobility management entity (mobility management entity, MME) or a serving gateway (serving gateway, SGW), or may be a core network device in a 5G system, for example, an access and mobility management function (access and mobility management function, AMF) network element or a user plane function (user plane function, UPF) network element, or may be a core network device having another name. This is not limited in embodiments of this application.

The access network device may be any device that has a wireless transceiver function. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a 5G base station (next-generation NodeB, gNB) or a transmission point (TRP or TP) in the 5G system, for example, an NR system, or one antenna panel or a group of antenna panels (including a plurality of antenna panels) of a base station in the 5G system, or may be a network node, for example a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU may be responsible for processing a non-real-time protocol and service, for example, may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing a physical layer protocol and a real-time service, for example, may implement functions of a radio link control (radio link control, RLC) layer, a media access control (media access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU may implement some processing functions of the physical layer, and functions related to radio frequency processing and an active antenna. Information at the RRC layer is eventually submitted to the PHY layer and is converted into information at the PHY layer, or is converted from information at the PHY layer. Therefore, in this architecture, high-layer signaling such as RRC layer signaling may also be considered as being sent by the DU or sent by the DU and the AAU.

It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

The access network device provides a service for a cell, and the terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells feature small coverage ranges and low transmit power, and are applicable to providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a pad (pad), a computer with a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile communication network (public land mobile network, PLMN), and the like.

The wearable device may also be referred to as an intelligent wearable device, and is a general term for wearable devices, such as glasses, gloves, a watch, clothing, and shoes, that are developed through smart design of daily wear by using a wearable technology. The wearable device is a portable device that can be directly worn on a body or integrated into clothes or accessories of the user. The wearable device is a hardware device, and also implements a powerful function through software support, data exchange, and cloud interaction. In a broad sense, the intelligent wearable device includes a full-featured and large-sized device, for example, a smartwatch or smart glasses, that can implement complete or partial functions without depending on a smartphone, and a device, for example, various smart bands or smart jewelry used for vital sign monitoring, that is dedicated to only one type of application function and that needs to be used in cooperation with another device like the smartphone.

In addition, the terminal device may alternatively be a terminal device in an internet of things (Internet of things, IoT) system. IoT is an important part in future development of information technologies. A main technical feature of the IoT is to connect an object to a network by using a communication technology, to implement an intelligent network for human-to-computer interconnection and object-to-object interconnection. In an IoT technology, massive connections, deep coverage, and power saving for a terminal are implemented by using, for example, a narrow band (narrow band, NB) technology.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that the execution body can run a program that records code for the method provided in embodiments of this application, to perform communication according to the method provided in embodiments of this application. For example, the execution body of the method provided in embodiments of this application may be the terminal device or the network device, or may be a functional module that is in the terminal device or the network device and that can invoke the program and execute the program.

In addition, the aspects or features of this application may be implemented as a method, an apparatus, or a product for which standard programming and/or engineering technologies are used. The term "product" used in this application includes a computer program that can be accessed from any computer-readable device, carrier or medium. For example, the computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or another machine-readable medium that are configured to store information. The term "machine-readable medium" may include but is not limited to a radio channel, and various other media that can store, contain, and/or carry instructions and/or data.

The following describes the 5G communication system by using an example in which the terminal device is the UE, the access network device is the gNB, and the core network device includes the AMF network element, the user plane function (user plane function, UPF) network element, a session management function (session management function, SMF) network element, a policy control function (policy control function, PCF) network element, an application function (application function, AF) network element, and a network exposure function (network exposure function, NEF) network element.

FIG. 2 is a diagram of a communication system 200 according to an embodiment of this application. As shown in FIG. 2, the communication system 200 may specifically include the following network elements:

1. Application server: is configured to: perform operations such as encoding, decoding, and rendering on service data, and transmit the service data to UE via a network side.
2. Data network (data network, DN): is a network used to provide transmitted data, for example, an internet network.
3. UPF network element: A UPF is a user plane function, and the UPF network element is responsible for forwarding user data.
4. gNB.
5. UE.

Optionally, the communication system 200 further includes:

6. AF network element: is configured to: perform data routing that is influenced by an application, access a network exposure function network element, interact with a policy framework for policy control, or the like.
7. PCF network element: is a unified policy framework for guiding network behavior, and provides policy rule information and the like for a control plane function network element (for example, an AMF network element or an SMF network element).
8. NEF network element: is configured to expose, to the outside in a secure manner, a service, a capability, and the like that are provided by a 3rd generation partnership project (3rd generation partnership project, 3GPP) network function, and may enable the AF network element to provide information for the 3GPP network function.
9. SMF network element: is mainly configured for session management, internet protocol (internet protocol, IP) address allocation and management of a terminal device, selection and management of a user plane function, termination of interfaces toward policy control or charging functions, downlink data notification, and the like.
10. AMF network element: is mainly configured to perform mobility management, access management, and the like, and may be configured to implement another function, for example, a lawful monitoring function or an access authorization (or authentication) function, in mobility management entity (mobility management entity, MME) functions other than session management.

In the communication system 200, the UE may access a 5G network through a Uu interface, and communicate with the gNB. The gNB and the UPF network element may communicate with each other through an N3 interface. The UPF network element and the DN may communicate with each other through an N6 interface. The UPF and the SMF network element may communicate with each other through an N4 interface. The gNB and the AMF network element may communicate with each other through an N2 interface. The UE and the AMF network element may communicate with each other through an N1 interface. The AMF network element and the SMF network element may communicate with each other through an N11 interface. The SMF network element and the PCF network element may communicate with each other through an N7 interface. The AF network element and the PCF network element may communicate with each other through an N5 interface. The AF network element and the NEF network element may communicate with each other through an N33 interface. It should be noted that names of the interfaces between the network elements in FIG 2 are merely examples. During specific implementation, the names of the interfaces of the communication system 200 may alternatively be other names. This is not specifically limited in embodiments of this application.

It should be noted that, names of the network elements (for example, the SMF, the AF, and the UPF) included in FIG. 2 are also merely examples, and do not constitute a limitation on functions of the network elements. In the 5G network and another future network, the foregoing network elements may alternatively have other names. This is not specifically limited in embodiments of this application. For example, in a 6G network, the terms for 5G may be used for some or all of the foregoing network elements, or other names may be used, or the like. This is uniformly described herein, and details are not described below. In addition, it should be understood that, names of messages (or signaling) that are communicated between the foregoing network elements are merely examples, and do not constitute any limitation on functions of the messages.

Certainly, another network element, for example, a network slice selection function (network slice selection function, NSSF) network element, may be further deployed in the communication system 200. This is not specifically limited in embodiments of this application.

It should be understood that the communication system 200 used in embodiments of this application is merely an example of a network architecture described from a perspective of a service-based architecture, and the network architecture applicable to embodiments of this application is not limited thereto. Any network architecture that can implement the functions of the foregoing network elements is applicable to embodiments of this application.

With the continuous development of a communication system (for example, the communication system 100 shown in FIG. 1 or the communication system 200 shown in FIG. 2), a data transmission delay is continuously reduced, and a transmission capacity is larger. Some multimedia services with high real-time performance and a high data capacity requirement, such as video transmission, cloud gaming (cloud gaming), and extended reality (extended reality, XR), are emerging in the communication system, where the XR includes virtual reality (virtual reality, VR) and augmented reality (augmented reality, AR). As a new service, a multi-modal service is added with a haptic experience dimension based on the XR, so that remote touch and remote control can be implemented, and remote sensing in a plurality of aspects such as vision, hearing, haptics, and kinesthesia can be implemented. The multi-modal service has large development space in related fields such as industrial automation, healthcare, and distance education, provides comprehensive interaction experience for a user, and features great application value and business potential.

Haptic internet is a type of the multi-modal service, and services of the haptic internet can be classified into the following four types:

A first type is immersive haptic XR. Compared with a conventional XR service, the immersive haptic XR can perform pure simulation and real-time interaction on sensory information such as vision, hearing, and haptics, to create immersive and realistic experience for the user, enabling the user to traverse virtual and real worlds.

A second type is remote control. In conventional technologies, a manipulator can perform remote control only by using a video. The haptic internet further enables haptics, to significantly improve a sense of presence of the manipulator and improve operation precision. The remote control will be widely applied to scenarios such as industrial and medical scenarios.

A third type is education and training. When learners perform a task of fine movement skills, a coach can sense movements of the learners and correct the movements if necessary. The learners can see, hear, and feel an exact action of their coach. Whether the learners are engineers, pilots, or surgeons, a concept of "hands-on" will bring a new meaning.

A fourth type is haptic broadcast. Based on conventional broadcast, haptic characteristics are introduced, and a haptic stream and a broadcast stream are transmitted in a channel-associated manner, so that viewing experience of viewers can be improved.

In the haptic internet, quality of haptic experience of the user in a human-computer interaction process may be evaluated by using a haptic evaluation indicator. An existing haptic evaluation indicator includes a subjective evaluation indicator and an objective evaluation indicator. The subjective evaluation indicator may be, for example, QoE, and the objective evaluation indicator may be, for example, a P-MSE, an HPW-PSNR, or an HSSIM.

The existing objective evaluation indicator cannot accurately reflect real feeling of a person, causing low accuracy. In particular, a quantity of HSSIM parameters is large, and all the parameters need to be obtained through experiments. Environments and tasks with different complexity further need to correspond to different parameter values. The existing subjective evaluation indicator needs to be measured by bringing together a large quantity of participants to take a related test and give a mean opinion score (mean opinion score, MOS). For different scenarios and tasks, the test needs to be repeatedly taken, which is time-consuming and labor-intensive. Consequently, costs are high, and a scoring standard varies between individuals.

In view of this, this application provides a haptic evaluation method and apparatus. An application-layer parameter and a network-side parameter of a target service are obtained, to determine a haptic evaluation indicator of the target service based on the application-layer parameter and the network-side parameter. In comparison with an existing objective evaluation indicator, because the application-layer parameter includes haptic information of the target service, the haptic evaluation indicator determined in this manner can more accurately reflect real feeling of a person, so that accuracy of haptic evaluation can be improved. In comparison with an existing subjective evaluation indicator, because different services correspond to different haptic information, in the haptic evaluation method in this application, a haptic evaluation result corresponding to a current scenario or a current task can be obtained without a manual operation, so that time and labor costs can be reduced.

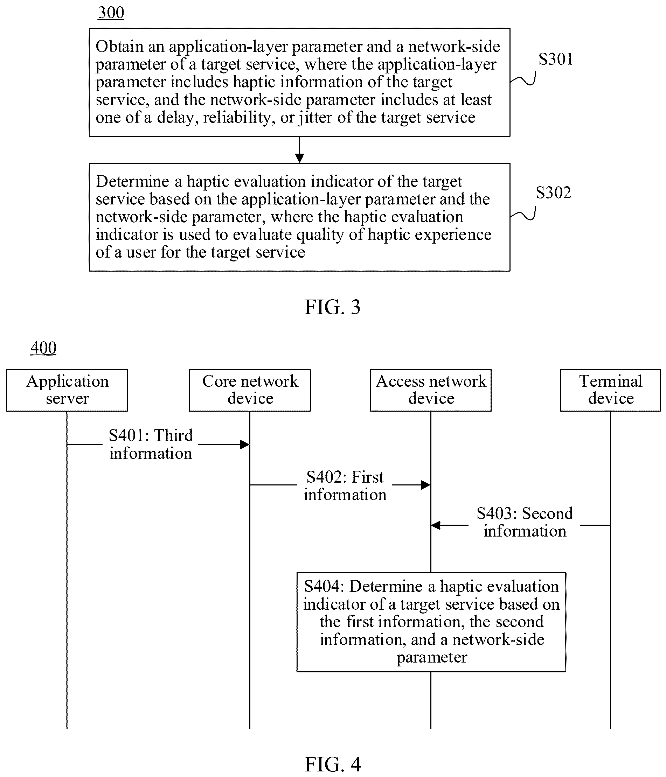

The following describes in detail a haptic evaluation method 300 according to an embodiment of this application with reference to FIG. 3. The method 300 may be applied to the communication system 100 shown in FIG. 1, or may be applied to the communication system 200 shown in FIG. 2, or may be applied to another communication system. This is not limited in this embodiment of this application. The method 300 may be performed by an access network device, or may be performed by a chip in the access network device, and includes the following steps.

S301: Obtain an application-layer parameter and a network-side parameter of a target service, where the application-layer parameter includes haptic information of the target service, and the network-side parameter includes at least one of a delay, reliability, or jitter of the target service.

The "obtaining" may include obtaining from another device (for example, a core network device or a terminal device), or may include obtaining from inside the access network device (for example, obtaining from a memory of the access network device). This is not limited in this embodiment of this application.

For example, the haptic information may include at least one of vibration time, vibration intensity, haptic compressibility, key parameter for haptic coding, force feedback intensity, or interaction intensity. Different haptic compressibility, different key parameters for haptic coding, and different interaction intensities have strong influence on service transmission reliability, and different vibration time, different vibration intensities, and different force feedback intensities have influence on subjective experience of a user.

It should be understood that the interaction intensity may refer to a closeness degree of human-computer interaction, and is related to dynamicity and complexity of a human-computer interaction environment. The haptic compressibility may be a ratio of a compressed data volume to an original data volume, or may be a ratio of an original data volume to a compressed data volume, or may be in a form of a percentage. However, this is not limited in this embodiment of this application.

It should be understood that the target service in this embodiment of this application may include only a haptic service, or may include a video service in addition to the haptic service.

When the target service includes the haptic service and the video service, optionally, the application-layer parameter further includes video media information of the target service. For example, the video media information may include at least one of a frame rate, a periodicity, or information about a protocol data unit (protocol data unit, PDU) set (set). The information about the PDU set may include information such as a serial number of the PDU set, an end identifier of the PDU set, a serial number of a PDU in the PDU set, an importance identifier of the PDU set, and a size of the PDU set. This is not specifically limited in this embodiment of this application.

S302: Determine a haptic evaluation indicator of the target service based on the application-layer parameter and the network-side parameter, where the haptic evaluation indicator is used to evaluate quality of haptic experience of the user for the target service.

It should be understood that the haptic evaluation indicator may also be referred to as a haptic evaluation result, haptic multi-indicator assessment fusion (haptic multi-indicator assessment fusion, HMAF), or the like, or has another name in another scenario. This is not limited in this embodiment of this application.

In the haptic evaluation method in this embodiment of this application, an application-layer parameter and a network-side parameter of a target service are obtained, to determine a haptic evaluation indicator of the target service based on the application-layer parameter and the network-side parameter. In comparison with an existing objective evaluation indicator, because the application-layer parameter includes haptic information of the target service, the haptic evaluation indicator determined in this manner can more accurately reflect real feeling of a person, so that accuracy of haptic evaluation can be improved. In comparison with an existing subjective evaluation indicator, because different services correspond to different haptic information, in the haptic evaluation method in this application, a haptic evaluation result corresponding to a current scenario or a current task can be obtained without a manual operation, so that time and labor costs can be reduced.

Further, after the access network device determines the haptic evaluation indicator of the target service, the access network device may select a scheduling policy corresponding to the haptic evaluation indicator, and transmit data of the target service according to the scheduling policy, to improve network transmission resource utilization, thereby improving user experience.

Optionally, the application-layer parameter may include an application-layer parameter from an application server and/or an application-layer parameter from the terminal device. In a possible implementation, the access network device may determine the haptic evaluation indicator of the target service based on the application-layer parameter from the application server and the network-side parameter. In another possible implementation, the access network device may determine the haptic evaluation indicator of the target service based on the application-layer parameter from the terminal device and the network-side parameter. In still another possible implementation, the access network device may determine the haptic evaluation indicator of the target service based on the application-layer parameter from the application server, the application-layer parameter from the terminal device, and the network-side parameter.

It should be understood that the application-layer parameter of the application server and the application-layer parameter of the terminal device may be completely the same, or may be partially the same, or may be different. This is not limited in this embodiment of this application. For an uplink service, the application-layer parameter of the terminal device may include vibration time, vibration intensity, haptic compressibility, key parameter for haptic coding, force feedback intensity, interaction intensity, and the like. In other words, these parameters may be provided by the terminal device for the access network device. For a downlink service, the foregoing parameters may be provided by the application server for the access network device. In other words, the application-layer parameter of the application server may include vibration time, vibration intensity, haptic compressibility, key parameter for haptic coding, force feedback intensity, interaction intensity, and the like.

Optionally, the application-layer parameter of the terminal device may further include device parameters such as a device type, a model, a product specification, a resolution, and a refresh rate. Regardless of the uplink service or the downlink service, these device parameters are provided by the terminal device for the access network device.

In an optional embodiment, S301 includes: receiving first information from the core network device, where the first information includes the application-layer parameter.

It should be understood that, in this embodiment, the application-layer parameter included in the first information is the application-layer parameter of the application server. The application server may send third information including the application-layer parameter to the core network device through an N6 interface. The core network device receives the third information, extracts the application-layer parameter from the third information, includes the application-layer parameter in the first information, and forwards the first information to the access network device through an N3 interface. Correspondingly, the access network device receives the first information including the application-layer parameter.

For example, in a process in which the application server sends the application-layer parameter to the core network device, a field that carries the application-layer parameter may be located at a real-time transport protocol (real-time transport protocol, RTP) layer (for example, located in an RTP header of the RTP layer), or located at a user datagram protocol (user datagram protocol, UDP) layer (for example, located in a UDP header of the UDP layer), or located at a newly added protocol layer between the RTP layer and the UDP layer, or may be a newly added field between the RTP layer and the UDP layer. This is not limited in this embodiment of this application.

For example, in a process in which the core network device sends the application-layer parameter to the access network device, a field that carries the application-layer parameter may be an extension header of a GPRS tunneling protocol-user plane (user GPRS tunnel protocol, GTP-U, where a GPRS is short for a general packet radio service (general packet radio service, GPRS)) packet, that is, the first information may be the GTP-U packet.

For example, a format of the GTP-U packet may be shown in Table 1.

Table 1

| Version | Protocol type | (*) | Extension header flag | Serial number | Number marking |
|---------|---------------|-----|----------------------|---------------|----------------|
| Message type | | | | | |
| ... | | | | | |
| Number of network-layer protocol data units | | | | | |
| Extension header (carrying the application-layer parameter in this embodiment of this application) | | | | | |

As shown in Table 1, the GTP-U packet includes the following fields: version (version), protocol type (protocol type, PT), extension header flag (extension header flag, E), serial number (serial number, S), number marking (number marking, PN), message type (message type), number (number) of network-layer protocol data units (N-protocol data unit, N-PDU), extension header (extension header), and (*) indicating an empty bit, for example, 0. It should be understood that the GTP-U packet may further include other fields that are not all shown in Table 1.

In an optional embodiment, S301 further includes: receiving second information from the terminal device, where the second information includes the application-layer parameter.

It should be understood that, in this embodiment, the application-layer parameter included in the first information is the application-layer parameter of the terminal device. The terminal device may send the second information including the application-layer parameter to the access network device through a Uu interface.

For example, the second information may be carried in radio resource control (radio resource control, RRC) signaling, a media access control control element (media access control control element, MAC CE), or uplink control information (uplink control message, UCI). This is not limited in this embodiment of this application.

For ease of understanding, the following describes embodiments of this application in detail with reference to FIG. 4 by using an example in which the application-layer parameter includes the application-layer parameter from the application server and the application-layer parameter from the terminal device.

FIG. 4 is a schematic flowchart of another haptic evaluation method 400 according to an embodiment of this application. The method 400 may be applied to the communication system 100 shown in FIG. 1, or may be applied to the communication system 200 shown in FIG. 2, or may be applied to another communication system. This is not limited in this embodiment of this application. The method 400 includes the following steps.

S401: An application server sends third information to a core network device, where the third information includes an application-layer parameter of the application server. Correspondingly, the core network device receives the third information.

S402: The core network device sends first information to an access network device, where the first information includes an application-layer parameter of the application server. Correspondingly, the access network device receives the first information.

S403: A terminal device sends second information to the access network device, where the second information includes an application-layer parameter of the terminal device. Correspondingly, the access network device receives the second information.

S404: The access network device determines a haptic evaluation indicator of a target service based on the first information, the second information, and a network-side parameter.

It should be understood that S403 may be performed after S401 and S402, or may be performed before S401 and S402, or may be performed in parallel with S401 and S402. This is not limited in this embodiment of this application.

The following describes in detail how to determine the haptic evaluation indicator in this embodiment of this application.

In this embodiment of this application, the access network device may determine the haptic evaluation indicator of the target service in a plurality of different manners.

Manner 1: The access network device may determine the haptic evaluation indicator of the target service according to a formula.

In a possible implementation, the haptic evaluation indicator may be calculated from three perspectives: the application-layer parameter of the application server, the network-side parameter, and the application-layer parameter of the terminal device.

In Case 1, if the access network device receives the application-layer parameter from the application server, the haptic evaluation indicator may be obtained by performing weighted summation on a first value and a third value, where the first value is a value obtained by inputting, into a first function, the application-layer parameter from the application server, and the third value is a value obtained by inputting the network-side parameter into a third function.

For example, the haptic evaluation indicator in Case 1 is denoted as $\text{HMAF}_1$, the first function is denoted as $f_1$, the third function is denoted as $f_3$, and a calculation formula corresponding to Case 1 may be:

$$\text{HMAF}_1 = w_1 \times f_1(a) + w_2 \times f_3(c)$$

$w_1$ and $w_2$ are weighting coefficients, $w_1 + w_2 = 1$, $a$ is the application-layer parameter of the application server, and $c$ is the network-side parameter.

In Case 2, if the access network device receives the application-layer parameter from the terminal device, the haptic evaluation indicator may be obtained by performing weighted summation on a second value and the third value, where the second value is a value obtained by inputting, into a second function, the application-layer parameter from the terminal device, and the third value is the value obtained by inputting the network-side parameter into the third function.

For example, the haptic evaluation indicator is denoted as $\text{HMAF}_2$, the second function is denoted as $f_2$, the third function is denoted as $f_3$, and a calculation formula corresponding to Case 2 may be:

$$\text{HMAF}_2 = w_3 \times f_2(b) + w_4 \times f_3(c)$$

$w_3$ and $w_4$ are weighting coefficients, $w_3 + w_4 = 1$, $b$ is the application-layer parameter of the terminal device, and c is the network-side parameter.

In Case 3, if the access network device receives both the application-layer parameter from the application server and the application-layer parameter from the terminal device, the haptic evaluation indicator may be obtained by performing weighted summation on the first value, the second value, and the third value.

For example, the haptic evaluation indicator is denoted as $\text{HMAF}_3$, the first function is denoted as $f_1$, the second function is denoted as $f_2$, the third function is denoted as $f_3$, and a calculation formula corresponding to Case 3 may be:

$$\text{HMAF}_3 = w_5 \times f_1(a) + w_6 \times f_2(b) + w_7 \times f_3(c)$$

$w_5$, $w_6$, and $w_7$ are weighting coefficients, $w_5 + w_6 + w_7 = 1$, $a$ is the application-layer parameter of the application server, b is the application-layer parameter of the terminal device, and c is the network-side parameter.

Assuming that the application-layer parameter $a$ of the application server includes vibration time T and a force feedback intensity F, $f_1(a)$ may be represented as:

$$f_1(\text{T},\text{F}) = 100 - w_{11} \times (\text{T} - 100)^2 - w_{12} \times (\text{F} - 70)^2$$

$w_{11}$ and $w_{12}$, are weighting coefficients, and $w_{11} + w_{12} = 1$.

It can be learned from the formula for $f_1(\text{T},\text{F})$ that an optimal value of the vibration time is 100, and an optimal value of the force feedback intensity is 70. If a value of T is greater than or less than the optimal value of the vibration time, or a value of F is greater than or equal to the optimal value of the force feedback intensity, user experience deteriorates according to the quadratic function.

Assuming that the application-layer parameter b of the terminal device includes a sampling frequency of the terminal device T_sampling, $f_2(b)$ may be represented as:

$$f_2(\text{T\_sampling}) = w_{21} \times \log(\text{T\_sampling} + 1)$$

$w_{21}$ is a weighting coefficient.

It can be learned from the formula for $f_2(\text{T\_sampling})$ that terminal devices with different capabilities perform haptic rendering at different granularities, and a higher sampling frequency and a higher rendering frequency of the terminal device indicate that haptic experience of a user is closer to real feeling. When the sampling frequency is low, user experience can be greatly improved by increasing the sampling frequency. When the sampling frequency is already extremely high and the user cannot recognize a higher sampling frequency, improvement in user experience is gradually reduced when the sampling frequency is increased.

Assuming that the network-side parameter c includes a packet delay budget (packet delay budget, PDB) and a packet error rate (packet error rate, PER), $f_3(\text{PDB},\text{PER})$ may be represented as:

$$f_3(\text{PDB}, \text{PER}) = w_{31} \times (100 - \text{PDB}) + w_{32} \times (l \times (100 - \text{PER} * 100))$$

$w_{31}$ and $w_{32}$ are weighting coefficients, $w_{31} + w_{32} = 1$, and $l$ is a preset coefficient. It should be understood that the PDB is a PDB of the target service, and the PER is a PER of the target service.

Further, if calculation is performed based on a service dimension, an expression of $f_3(c)$ includes the following two cases:

When the target service includes only a haptic service, $f_3(c)$ may be represented as:

$$f_3(\text{PDB}_1, \text{PER}_1) = w_{33} \times (100 - \text{PDB}_1) + w_{34} \times (l \times (100 - \text{PER}_1 * 100))$$

$w_{33}$ and $w_{34}$ are weighting coefficients, $w_{33} + w_{34} = 1$, a $\text{PDB}_1$ is a PDB of the haptic service, a $\text{PER}_1$ is a PER of the haptic service, and $l$ is the preset coefficient.

When the target service includes the haptic service and a video service, $f_3(c)$ may be represented as:

$$\begin{aligned} f_3(\text{PDB}_1, \text{PER}_1, \text{PDB}_2, \text{PER}_2) = &\, w_{35} \times (100 - \text{PDB}_1) + w_{36} \times (l \times (100 - \text{PER}_1 \times 100)) \\ &+ w_{37} \times (100 - \text{PDB}_2) + w_{38} \times (l \times (100 - \text{PER}_2 \times 100)) \\ &+ w_{39} \times (100 - 10 \times d) \end{aligned}$$

$w_{35}$, $w_{36}$, $w_{37}$, $w_{38}$, and $w_{39}$, are weighting coefficients, $w_{35} + w_{36} + w_{37} + w_{38} + w_{39} = 1$, $l$ is the preset coefficient, and $d$ is a synchronization error between the haptic service and the video service.

It should be understood that the synchronization error is a delay difference between different delays generated by transmitting, to a network side, two signals generated at the same time. This is not limited in this embodiment of this application.

For example, $l = 2/3$.

For example, $w_{35} = 0.3$, $w_{36} = 0.3$, $w_{37}, = 0.2$, $w_{38} = 0.2$, and $w_{39} = 0.1$.

In another possible implementation, the haptic evaluation indicator may be calculated based on different modalities of the service, that is, calculation may be performed based on a dimension, for example, a haptic service or a video service.

In Case 1, the target service includes only the haptic service, the network-side parameter is a network-side parameter corresponding to the haptic service, and the application-layer parameter is haptic information.

In a possible implementation, the haptic evaluation indicator may be determined based on the network-side parameter corresponding to the haptic service. Optionally, the haptic evaluation indicator may be a seventh value, and the seventh value is a value obtained by inputting, into a fourth function, the network-side parameter corresponding to the haptic service.

For example, the haptic evaluation indicator is denoted as $\text{HMAF}_4$, the fourth function is denoted as $f_4$, and a calculation formula corresponding to this manner may be:

$$\text{HMAF}_4 = f_4(e)$$

$e$ *is* the network-side parameter corresponding to the haptic service.

Assuming that the network-side parameter $e$ corresponding to the haptic service includes a PDB, a PER, and

jitter (jitter), $f_4(e)$ may be represented as:

$$f_4(e) = (100 - \text{PDB}) + (100 - \text{PER} \times 100) - |\text{jitter}|$$

In another possible implementation, the haptic evaluation indicator may be determined based on the network-side parameter corresponding to the haptic service and the haptic information. Optionally, the haptic evaluation indicator may be an eighth value, and the eighth value is a value obtained by inputting, into a fourth function, the network-side parameter corresponding to the haptic service and the haptic information.

For example, the haptic evaluation indicator is denoted as $\text{HMAF}_5$, the fourth function is denoted as $f_4$, and a calculation formula corresponding to this manner may be:

$$\text{HMAF}_5 = f_5(e, g)$$

.

$e$ is the network-side parameter corresponding to the haptic service, and g is the haptic information.

In Case 2, the target service includes the haptic service and the video service, application-layer information received by the access network device includes haptic information and video media information, the network-side parameter includes a network-side parameter corresponding to the haptic service and a network-side parameter corresponding to the video service, and the application-layer parameter includes the haptic information and the video media information.

In a possible implementation, the haptic evaluation indicator may be determined based on the network-side parameter (that is, the network-side parameter corresponding to the haptic service and the network-side parameter corresponding to the video service). The haptic evaluation indicator may be obtained by performing weighted summation on a ninth value, a tenth value, and an eleventh value, where the ninth value is a value obtained by inputting, into a fourth function, the network-side parameter corresponding to the haptic service, the tenth value is a value obtained by inputting, into a fifth function, the network-side parameter corresponding to the video service, and the eleventh value is a value obtained by inputting, into a sixth function, a synchronization error between the haptic service and the network-side parameter of the video service.

For example, the haptic evaluation indicator is denoted as $\text{HMAF}_6$, the fourth function is denoted as $f_4$, the fifth function is denoted as $f_5$, the sixth function is denoted as $f_6$, and a calculation formula corresponding to this manner may be:

$$\text{HMAF}_6 = w_8 \times f_4(e) + w_9 \times f_5(i) + w_{10} \times f_6(d)$$

$w_8$, $w_9$, and $w_{10}$, are weighting coefficients, $w_8 + w_9 + w_{10} = 1$, $e$ is the network-side parameter corresponding to the haptic service, i is the network-side parameter corresponding to the video service, and d is the synchronization error between the haptic service and the video service.

Assuming that $e$ includes a $\text{PDB}_1$ and a $\text{PER}_1$, and i includes a $\text{PDB}_2$ and a $\text{PER}_2$, a corresponding haptic evaluation formula $\text{HMAF}_6$ is:

$$\begin{aligned} \text{HMAF}_6 &= w_{44} \times (100 - \text{PDB}_1) + w_{45} \times (s \times (100 - \text{PER}_1 \times 100)) \\ &+ w_{46} \times (100 - \text{PDB}_2) + w_{47} \times (s \times (100 - \text{PER}_2 \times 100)) \\ &+ w_{48} \times (100 - 10 \times d) \end{aligned}$$

$w_{44}$, $w_{45}$, $w_{46}$, $w_{47}$, and $w_{48}$, are weighting coefficients, $w_{44} + w_{45} + w_{46} + w_{47}$ $w_{48} = 1$, s is a preset coefficient, and d is the synchronization error between the haptic service and the video service.

For example, $s = 2/3$.

For example, $w_{44} = 0.3$, $w_{45} = 0.3$, $w_{46} = 0.2$, $w_{47} = 0.2$, and $w_{48} = 0.1$.

In another possible implementation, the haptic evaluation indicator may be determined based on the network-side parameter (that is, the network-side parameter corresponding to the haptic service and the network-side parameter corresponding to the video service) and the application-layer parameter (that is, the haptic information and the video media information). The haptic evaluation indicator may be obtained by performing weighted summation on a fourth value, a fifth value, and a sixth value, where the fourth value is a value obtained by inputting, into a fourth function, the haptic information and the network-side parameter corresponding to the haptic service, the fifth value is a value obtained by inputting, into a fifth function, the video media information and the network-side parameter corresponding to the video service, and the sixth value is a value obtained by inputting, into a sixth function, a synchronization error between the haptic service and the video service.

For example, the haptic evaluation indicator is denoted as $\text{HMAF}_7$, the fourth function is denoted as $f_4$, the fifth

function is denoted as $f_5$, the sixth function is denoted as $f_6$, and a calculation formula corresponding to Case 2 may be:

$$\mathrm{HMAF}_7 = w_{17}' \times f_4(e,g) + w_{18}' \times f_5(i,k) + w_{19}' \times f_6(d)$$

$w_{17}$, $w_{18}$, and $w_{19}$ are weighting coefficients, $w_{17} + w_{18} + w_{19} = 1$, $e$ is the network-side parameter corresponding to the haptic service, g is the haptic information, $i$ is the network-side parameter corresponding to the video service, k is the video media information, and $d$ is the synchronization error between the haptic service and the video service.

Assuming that $e$ includes a PDB$_1$, a PER$_1$, jitter$_1$, and compressibility (compressibility, Cpre), and $i$ includes a PDB$_2$, a PER$_2$, and jitter$_2$, a corresponding haptic evaluation formula HMAF$_7$ is:

$$\mathrm{HAMF}_7 = w_{51} \times ((100 - \mathrm{PDB}_1) + (100 - \mathrm{PER}_1 \times 100) - |\mathrm{jitter}_1| + (1 - Cpre) \times 100) +$$
$$w_{52} \times ((100 - \mathrm{PDB}_2) + (100 - \mathrm{PER}_2 \times 100) - |\mathrm{jitter}_2|) + w_{53} \times d$$

$w_{51}$, $w_{52}$, and $w_{53}$ are weighting coefficients, $w_{51} + w_{52} + w_{53} = 1$, and $d$ is the synchronization error between the haptic service and the video service.

For example, $w_{51} = 0.5$, $w_{52} = 0.4$, and $w_{53} = 0.1$.

Manner 2: The access network device may determine the haptic evaluation indicator of the target service based on a table.

In a possible implementation, the access network device may perform table lookup based on different modalities of the service, to obtain the haptic evaluation indicator. In other words, the access network device may perform table lookup based on a dimension, for example, a haptic service or a video service.

In Case 1, the target service includes only the haptic service.

Assuming that the network-side parameter includes a PDB and a PER, and haptic information includes haptic compressibility, a possible form of a table is as follows:

Table 2

| Index | PDB | PER | Haptic compressibility | Haptic evaluation indicator |
|---|---|---|---|---|
| 1 | 0 to 5 ms | 99.999 | No compression | 100 |
| 2 | 5 to 10 ms | 99.99 to 99.999 | 20% | 90 |
| ... | ... | ... | ... | ... |
| N$_1$ | 25 ms | 99 | 100% | 0 |

As shown in Table 2, different PDBs, PERs, and haptic compressibility correspond to different scores for haptic evaluation indicators. The access network device may find, from Table 2, a haptic evaluation indicator corresponding to a PDB, a PER, and haptic compressibility of the target service. It should be understood that Table 2 further includes haptic evaluation indicators corresponding to different values of other PDBs, PERs, and haptic compressibility. This is not listed one by one herein. N$_1$ is an integer greater than 1.

For example, if the PDB of the target service is 7 ms, the PER is 99.999, and the haptic compressibility is 20%, the haptic evaluation indicator of the target service is 90. If a haptic evaluation indicator required by the user of the target service is 100, the access network device may improve a haptic evaluation indicator for subsequent transmission of the target service by shortening a delay, lowering an MCS, or the like, to meet the user requirement.

For example, if the PDB of the target service is 27 ms, the PER is 99, and the haptic compressibility is 100%, the haptic evaluation indicator of the target service is 0. In this case, the access network device may consider that the target service cannot meet the user requirement, and then stop subsequent data transmission, to reduce resources.

Optionally, if any one of the foregoing parameters is predefined, and a table corresponding to different values of the parameter is preset, the table corresponding to the parameter may be first selected based on the values of the parameter, and then lookup is performed.

The compressibility is used as an example. When the compressibility=10%, a possible form of a corresponding table is as follows:

Table 3

| Index | PDB | PER | Haptic evaluation indicator |
|---|---|---|---|
| 1 | 0 to 5 ms | 99.999 | 100 |

(continued)

| Index | PDB | PER | Haptic evaluation indicator |
|---|---|---|---|
| 2 | 5 to 10 ms | 99.99 to 99.999 | 90 |
| ... | ... | ... | ... |
| $N_2$ | 25 ms | 99 | 0 |

As shown in Table 3, when the compressibility=10%, different PDBs and PERs correspond to different scores for haptic evaluation indicators. The access network device may first determine Table 3 based on the compressibility of the target service: 10%, and then find, from Table 3, a haptic evaluation indicator corresponding to the PDB and the PER of the target service. It should be understood that Table 3 further includes haptic evaluation indicators corresponding to different values of other PDBs and PERs. This is not listed one by one herein. $N_2$ is an integer greater than 1.

When the compressibility=20%, a possible form of a corresponding table is as follows:

Table 4

| Index | PDB | PER | Haptic evaluation indicator |
|---|---|---|---|
| 1 | 0 to 5 ms | 99.999 | 90 |
| 2 | 5 to 10 ms | 99.99 to 99.999 | 80 |
| ... | ... | ... | ... |
| $N_3$ | 25 ms | 99 | 0 |

As shown in Table 4, when the compressibility=20%, different PDBs and PERs correspond to different scores for haptic evaluation indicators. The access network device may first determine Table 4 based on the compressibility of the target service: 20%, and then find, from Table 4, a haptic evaluation indicator corresponding to the PDB and the PER of the target service. It should be understood that Table 4 further includes haptic evaluation indicators corresponding to different values of other PDBs and PERs. This is not listed one by one herein. $N_3$ is an integer greater than 1.

In Case 2, the target service includes the video service and the haptic service.

Assuming that the network-side parameter includes a PDB and a PER, and haptic information includes haptic compressibility, the network-side parameter includes a PDB of the haptic service, a PER of the haptic service, a PDB of the video service, and a PER of the video service. In this case, a possible form of a table is as follows:

Table 5

| Index | PDB of the haptic service | PER of the haptic service | PDB of the video service | PER of the video service | Haptic compressibility | Haptic evaluation indicator |
|---|---|---|---|---|---|---|
| 1 | 0 to 5 ms | 99.999 | <10 ms | No compression | No compression | 100 |
| 2 | 5 to 10 ms | 99.99 to 99.999 | 5 to 10 ms | 20% | 20% | 90 |
| ... | ... | ... | ... | ... | ... | ... |
| $N_4$ | 25 ms | 99 | 25 ms | 100% | 100% | 0 |

As shown in Table 5, different PDBs of the haptic service, PERs of the haptic service, PDBs of the video service, PERs of the video service, and haptic compressibility correspond to different scores for haptic evaluation indicators. The access network device may find, from Table 5, a haptic evaluation indicator corresponding to the PDB of the haptic service, the PER of the haptic service, the PDB of the video service, the PER of the video service, and the haptic compressibility that are of the target service. It should be understood that Table 5 further includes haptic evaluation indicators corresponding to different values of other PDBs, PERs, and haptic compressibility. This is not listed one by one herein. $N_4$ is an integer greater than 1.

Specific table lookup manners of Table 3 to Table 5 are the same as that of Table 2. Details are not described herein again.

It should be understood that the foregoing tables may be agreed on in a protocol, or may be pre-configured. In addition, the foregoing tables may be in other forms. This is not specifically limited in this embodiment of this application.

It should be further understood that the access network device may select a corresponding table based on different service types; or the application server or the terminal device notifies the access network device to select a corresponding table. This is not specifically limited in this embodiment of this application.

Manner 3: The access network device may determine the haptic evaluation indicator of the target service by using a neural network model.

Optionally, S404 may include: inputting the application-layer parameter and the network-side parameter into a trained neural network model, to obtain the haptic evaluation indicator.

In this embodiment of this application, the trained neural network model may be considered as a black-box system, and may be obtained by training models including but not limited to a gradient boosting decision tree (Gradient Boosting Decision Tree, GBDT), a support vector machine (Support Vector Machine, SVM), a random forest, and the like. In this manner, prediction may be performed on subjective perception quality of given haptic experience. In other words, if the application-layer parameter and the network-side parameter are given, the haptic evaluation indicator may be obtained through prediction.

The following describes a process of training the neural network model.

It should be understood that the trained neural network model used in this embodiment of this application may be stored by the access network device after training, or may be sent to the access network device by another device after training. This is not limited in this embodiment of this application.

In an optional embodiment, the method further includes: collecting, when the application-layer parameter of the target service is a different parameter and/or the network-side parameter of the target service is a different parameter, a plurality of scores of each of a plurality of users for the target service, and an application-layer parameter and/or a network-side parameter corresponding to each of the plurality of scores; and inputting, into a neural network model by using the plurality of scores as tags, the application-layer parameter and/or the network-side parameter corresponding to each of the plurality of scores, and training the neural network model to obtain the trained neural network model.

Specifically, the model training process is divided into the following three phases:

Phase 1: Data collection.

A dataset in this embodiment of this application is obtained through collection according to a subjective test method. In this embodiment of this application, a usage status of a user is fully considered, and the haptic evaluation indicator is quantized. The user is required to score quality of experience of a test scenario after actual experience, to obtain a quality value of experience of the test scenario.

In this embodiment of this application, the user may freely adjust values of the application-layer parameter and the network-side parameter through a test interface of the neural network model, to change a haptic perception status of a scenario, and perform experience. When the user interacts with an object in the test scenario, the user perceives a change in haptic interaction quality caused by a parameter value change, and then the user may give, based on subjective feeling, a quality value of haptic experience considered by the user.

Because a standard for a subjective test varies between users, a correspondence shown in Table 6 is designed.

For example, in this embodiment of this application, the quality value of experience is quantized to 1 to 5 points, as shown in Table 6.

Table 6

| Quality value of experience | Standard |
| --- | --- |
| 1 | Complete distortion |
| 2 | Significant difference |
| 3 | Large difference |
| 4 | Slight but perceivable difference |
| 5 | Almost the same as a reference object |

It should be noted that the quality value of experience in Table 6 may alternatively be quantized to 1 to 10 points, 1 to 100 points, or another score range. This is not specifically limited in this embodiment of this application.

In this embodiment of this application, assuming that a quantity of user experience times is fixed to T, and an influencing factor is denoted as $m_i(i=1,2,3...,n)$, a score for quality of experience of an influencing factor is:

$$Q_i = \frac{\text{T}-m_i}{\text{T}}$$

It is assumed that $G=\alpha_1\times Q_1+\alpha_2\times Q_2+...+\alpha_n\times Q_n$ and $G \in [0, 1]$, where $\alpha_i$ is a weight of the influencing factor, and a sum of weights of all influencing factors is 1. Then, a total score for quality of user experience is quantized to 1 to 5 points. It is assumed that $Q = \beta \times G + 1$, and $Q \in [1, 5]$, where Q is a quality value of a current user experience, and $\beta$ is a quantization coefficient.

It should be understood that the foregoing influencing factor is a general term for the application-layer parameter and the network-side parameter, and may include both the application-layer parameter and the network-side parameter.

In the foregoing manner, the plurality of scores of each of the plurality of users for the target service, and the application-layer parameter and/or the network-side parameter corresponding to each of the plurality of scores may be obtained.

Phase 2: Data processing. In this embodiment of this application, outlier data in collected parameter data may be removed by using a boxplot, and data cleaning is performed, to obtain cleaned data.

Phase 3: Model training.

The cleaned data is input into a machine learning model (including but not limited to models such as the GBDT, the SVM, and the random forest) for training. Specifically, for the cleaned data, the plurality of scores of the user are used as tags, and application-layer parameters and/or network-side parameters corresponding to the plurality of scores are input into the neural network model for training. In a training process, a part of the data (for example, 80% of the data) is classified as a training set, and another part of the data (for example, 20% of the data) is classified as a validation set. A model parameter is adjusted, to obtain a model that meets a condition. For example, a model for which probability statistics of model-predicted-value data and true-value data are greater than a confidence threshold may be selected for storage, or a model for which a root-mean-square error (root-mean-square error, RMSE) between a model-predicted-value data and a true-value data is less than a preset threshold may be selected for storage.

Optionally, the access network device may train and store a plurality of (for example, more than 10) models. In a possible implementation, the access network device may separately perform prediction by using the plurality of stored models, then calculate a mean value of prediction results of all of the plurality of models, and use the mean value as a final prediction value, that is, the haptic evaluation indicator of the target service. This helps improve stability and accuracy of the prediction result.

In this embodiment of this application, the haptic evaluation indicator is determined through calculation by a neural network, and a subjective evaluation score of the user is collected by causing the user to adjust an application-layer parameter value and/or a network-side parameter value, which is closer to real user experience. Training is performed based on the dataset, so that accuracy of an evaluation indicator of perception quality of haptic experience can be effectively improved.

It should be understood that sequence numbers of the foregoing methods do not mean an execution sequence. The execution sequence of the processes should be determined based on functions and internal logic of the processes.

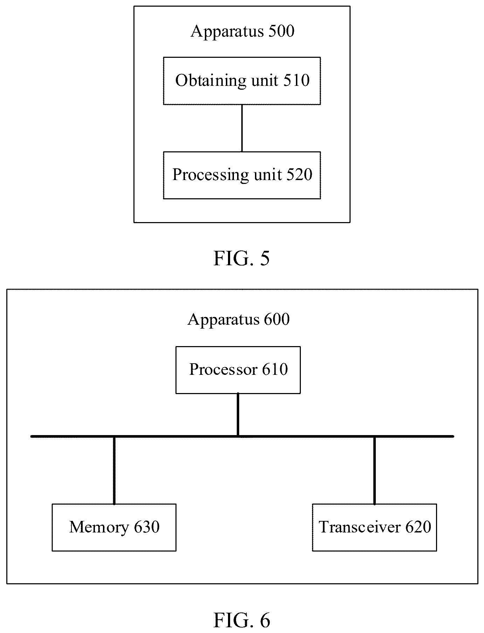

The foregoing describes in detail the haptic evaluation method according to embodiments of this application with reference to FIG. 1 to FIG. 4. The following describes in detail haptic evaluation apparatuses according to embodiments of this application with reference to FIG. 5 and FIG. 6.

FIG. 5 shows a haptic evaluation apparatus 500 according to an embodiment of this application. The apparatus 500 includes an obtaining unit 510 and a processing unit 520.

In a possible implementation, the apparatus 500 is configured to perform the steps corresponding to the access network device in the method 400.

The obtaining unit 510 is configured to obtain an application-layer parameter and a network-side parameter of a target service, where the application-layer parameter includes haptic information of the target service, and the network-side parameter includes at least one of a delay, reliability, or jitter of the target service. The processing unit 520 is configured to determine a haptic evaluation indicator of the target service based on the application-layer parameter and the network-side parameter, where the haptic evaluation indicator is used to evaluate quality of haptic experience of a user for the target service.

Optionally, the apparatus further includes a receiving unit, configured to receive first information from a core network device, where the first information includes the application-layer parameter.

Optionally, the first information is a GPRS tunneling protocol-user plane GTP-U packet, and the application-layer parameter is carried in an extension header of the GTP-U packet.

Optionally, the apparatus further includes the receiving unit, configured to receive second information from a terminal device, where the second information includes the application-layer parameter.

Optionally, the second information is carried in radio resource control RRC signaling, a media access control control element MAC CE, or uplink control information UCI.

Optionally, the application-layer parameter includes an application-layer parameter from an application server and/or an application-layer parameter from the terminal device.

The processing unit is specifically configured to:

determine the haptic evaluation indicator based on the application-layer parameter from the application server and/or the application-layer parameter from the terminal device and the network-side parameter.

Optionally, the haptic evaluation indicator is obtained by performing weighted summation on a first value and/or a second value and a third value, the first value is a value obtained by inputting, into a first function, the application-layer parameter from the application server, the second value is a value obtained by inputting, into a second function, the application-layer parameter from the terminal device, and the third value is a value obtained by inputting the network-side parameter into a third function.

Optionally, the target service includes a haptic service and a video service, the network-side parameter includes a network-side parameter corresponding to the haptic service and a network-side parameter corresponding to the video service, and the application-layer parameter further includes video media information.

The processing unit is further specifically configured to:

determine the haptic evaluation indicator based on the haptic information, the network-side parameter corresponding to the haptic service, the video media information, the network-side parameter corresponding to the video service, and a synchronization error between the haptic service and the video service.

Optionally, the haptic evaluation indicator is obtained by performing weighted summation on a fourth value, a fifth value, and the synchronization error, the fourth value is a value obtained by inputting, into a fourth function, the haptic information and the network-side parameter corresponding to the haptic service, and the fifth value is a value obtained by inputting, into a fifth function, the video information and the network-side parameter corresponding to the video service.

Optionally, the processing unit is specifically configured to:

input the application-layer parameter and the network-side parameter into a trained neural network model, to obtain the haptic evaluation indicator.

Optionally, the processing unit is further configured to:

collect, when the application-layer parameter of the target service is a different parameter and/or the network-side parameter of the target service is a different parameter, a plurality of scores of each of a plurality of users for the target service, and an application-layer parameter and/or a network-side parameter corresponding to each of the plurality of scores; and

input, into a neural network model by using the plurality of scores as tags, the application-layer parameter and/or the network-side parameter corresponding to each of the plurality of scores, and train the neural network model to obtain the trained neural network model.

Optionally, the haptic information includes at least one of the following: vibration time, vibration intensity, haptic compressibility, key parameter for haptic coding, force feedback intensity, or interaction intensity.

Optionally, the application-layer parameter further includes the video media information, and the video media information includes at least one of the following: a frame rate, a periodicity, or information about a protocol data unit PDU set.

It should be understood that the apparatus 500 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another suitable component that supports the described function. In an optional example, a person skilled in the art may understand that the apparatus 500 may specifically be the access network device in the foregoing embodiments. The apparatus 500 may be configured to perform the procedures and/or steps corresponding to the access network device in the foregoing method embodiments. To avoid repetition, details are not described herein again.

The apparatus 500 in the foregoing solutions has a function of implementing a corresponding step performed by the terminal apparatus in the foregoing method. The function may be implemented by hardware, or may be implemented by hardware executing corresponding software. The hardware or the software includes one or more modules corresponding to the foregoing function. For example, the obtaining unit may be replaced with a receiver, and another unit like the processing unit may be replaced with a processor, to separately perform the sending and receiving operations and related processing operations in the method embodiments.

In this embodiment of this application, the apparatus 500 in FIG. 5 may alternatively be a chip or a chip system, for example, a system on chip (system on chip, SoC). Correspondingly, the obtaining unit 510 may be a transceiver circuit of the chip. This is not limited herein.

FIG. 6 shows another haptic evaluation apparatus 600 according to an embodiment of this application. The apparatus 600 includes a processor 610, a transceiver 620, and a memory 630. The processor 610, the transceiver 620, and the memory 630 communicate with each other through an internal connection path. The memory 630 is configured to store instructions. The processor 610 is configured to execute the instructions stored in the memory 630, to control the transceiver 620 to send a signal and/or receive a signal.

It should be understood that the apparatus 600 may specifically be the access network device in the foregoing embodiments, and may be configured to perform the steps and/or the procedures corresponding to the access network device in the foregoing method embodiments. Optionally, the memory 630 may include a read-only memory and a random access memory, and provide instructions and data for the processor. A part of the memory may further include a nonvolatile random access memory. For example, the memory may further store information about a memory device type. The processor 610 may be configured to execute the instructions stored in the memory. In addition, when the processor 610 executes the instructions stored in the memory, the processor 610 is configured to perform the steps and/or the procedures in the foregoing method embodiments corresponding to the access network device. The transceiver 620 may include a transmitter and a receiver. The transmitter may be configured to implement the steps and/or the procedures that correspond to the transceiver and that are used to perform a sending action. The receiver may be configured to implement the steps and/or the procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate, a transistor logic device, a discrete hardware component, or the like. The general-purpose processor may be a microprocessor, or the processor may be any conventional processor or the like.

In an implementation process, the steps of the foregoing method may be completed by using a hardware-integrated logic circuit in the processor, or by using instructions in a form of software. The steps of the method disclosed with reference to embodiments of this application may be directly performed by a hardware processor, or may be performed by a combination of hardware in the processor and a software unit. The software unit may be located in a mature storage medium in the art, for example, a random access memory, a flash memory, a read-only memory, a programmable read-only memory, an electrically erasable programmable memory, or a register. The storage medium is located in the memory. The processor executes the instructions in the memory, and completes the steps of the foregoing method in combination with the hardware of the processor. To avoid repetition, details are not described herein again.

This application further provides a computer-readable storage medium. The computer-readable storage medium is configured to store a computer program, and the computer program is used to implement the method corresponding to the access network device in the foregoing embodiments.

This application further provides a computer program product. The computer program product includes a computer program (also referred to as code or instructions). When the computer program is run on a computer, the computer may perform the method corresponding to the access network device in the foregoing embodiments.

A person of ordinary skill in the art may be aware that, the method steps and units described with reference to embodiments disclosed in this specification can be implemented by electronic hardware, computer software, or a combination thereof. To clearly describe the interchangeability between the hardware and the software, the foregoing has generally described the steps and compositions of embodiments based on functions. Whether the functions are performed by hardware or software depends on a particular application and a design constraint condition of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the apparatus embodiments described above are merely examples. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may alternatively be implemented in electrical, mechanical, or another form.

The foregoing units described as separate parts may or may not be physically separate, and parts displayed as units may or may not be physical units, that is, may be at one location, or may be distributed on a plurality of network units. Some or all of the units may be selected based on actual requirements to achieve the objectives of the solutions of embodiments in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

**Claims**

1. A haptic evaluation method, comprising:

   obtaining an application-layer parameter and a network-side parameter of a target service, wherein the application-layer parameter comprises haptic information of the target service, and the network-side parameter comprises at least one of a delay, reliability, or jitter of the target service; and
   determining a haptic evaluation indicator of the target service based on the application-layer parameter and the network-side parameter, wherein the haptic evaluation indicator is used to evaluate quality of haptic experience of a user for the target service.

2. The method according to claim 1, wherein the obtaining the application-layer parameter of the target service comprises:
   receiving first information from a core network device, wherein the first information comprises the application-layer parameter.

3. The method according to claim 2, wherein the first information is a GPRS tunneling protocol-user plane GTP-U packet, and the application-layer parameter is carried in an extension header of the GTP-U packet.

4. The method according to claim 1 or 2, wherein the obtaining the application-layer parameter of the target service comprises:
   receiving second information from a terminal device, wherein the second information comprises the application-layer parameter.

5. The method according to claim 4, wherein the second information is carried in radio resource control RRC signaling, a media access control control element MAC CE, or uplink control information UCI.

6. The method according to any one of claims 1 to 5, wherein the application-layer parameter comprises an application-layer parameter from an application server and/or an application-layer parameter from the terminal device; and
   the determining the haptic evaluation indicator of the target service based on the application-layer parameter and the network-side parameter comprises:
   determining the haptic evaluation indicator based on the application-layer parameter from the application server and/or the application-layer parameter from the terminal device and the network-side parameter.

7. The method according to claim 6, wherein the haptic evaluation indicator is obtained by performing weighted summation on a first value and/or a second value and a third value, the first value is a value obtained by inputting, into a first function, the application-layer parameter from the application server, the second value is a value obtained by inputting, into a second function, the application-layer parameter from the terminal device, and the third value is a value obtained by inputting the network-side parameter into a third function.

8. The method according to any one of claims 1 to 5, wherein the target service comprises a haptic service and a video service, the network-side parameter comprises a network-side parameter corresponding to the haptic service and a network-side parameter corresponding to the video service, and the application-layer parameter further comprises video media information; and
   the determining the haptic evaluation indicator of the target service based on the application-layer parameter and the network-side parameter comprises:
   determining the haptic evaluation indicator based on the haptic information, the network-side parameter corresponding to the haptic service, the video media information, the network-side parameter corresponding to the video service, and a synchronization error between the haptic service and the video service.

9.  The method according to claim 8, wherein the haptic evaluation indicator is obtained by performing weighted summation on a fourth value, a fifth value, and the synchronization error, the fourth value is a value obtained by inputting, into a fourth function, the haptic information and the network-side parameter corresponding to the haptic service, and the fifth value is a value obtained by inputting, into a fifth function, the video information and the network-side parameter corresponding to the video service.

10. The method according to any one of claims 1 to 5, wherein the determining the haptic evaluation indicator of the target service based on the application-layer parameter and the network-side parameter comprises:
inputting the application-layer parameter and the network-side parameter into a trained neural network model, to obtain the haptic evaluation indicator.

11. The method according to claim 10, wherein the method further comprises:

collecting, when the application-layer parameter of the target service is a different parameter and/or the network-side parameter of the target service is a different parameter, a plurality of scores of each of a plurality of users for the target service, and an application-layer parameter and/or a network-side parameter corresponding to each of the plurality of scores; and
inputting, into the neural network model by using the plurality of scores as tags, the application-layer parameter and/or the network-side parameter corresponding to each of the plurality of scores, and training the neural network model to obtain the trained neural network model.

12. The method according to any one of claims 1 to 11, wherein the haptic information comprises at least one of the following:
vibration time, vibration intensity, haptic compressibility, key parameter for haptic coding, force feedback intensity, or interaction intensity.

13. The method according to any one of claims 1 to 12, wherein the application-layer parameter further comprises the video media information, and the video media information comprises at least one of the following:
a frame rate, a periodicity, or information about a protocol data unit PDU set.

14. A haptic evaluation apparatus, comprising:

an obtaining unit, configured to obtain an application-layer parameter and a network-side parameter of a target service, wherein the application-layer parameter comprises haptic information of the target service, and the network-side parameter comprises at least one of a delay, reliability, or jitter of the target service; and
a processing unit, configured to determine a haptic evaluation indicator of the target service based on the application-layer parameter and the network-side parameter, wherein the haptic evaluation indicator is used to evaluate quality of haptic experience of a user for the target service.

15. The apparatus according to claim 14, wherein the apparatus further comprises:
a receiving unit, configured to receive first information from a core network device, wherein the first information comprises the application-layer parameter.

16. The apparatus according to claim 15, wherein the first information is a GPRS tunneling protocol-user plane GTP-U packet, and the application-layer parameter is carried in an extension header of the GTP-U packet.

17. The apparatus according to claim 14 or 15, wherein the apparatus further comprises:
the receiving unit, configured to receive second information from a terminal device, wherein the second information comprises the application-layer parameter.

18. The apparatus according to claim 17, wherein the second information is carried in radio resource control RRC signaling, a media access control control element MAC CE, or uplink control information UCI.

19. The apparatus according to any one of claims 14 to 18, wherein the application-layer parameter comprises an application-layer parameter from an application server and/or an application-layer parameter from the terminal device; and

the processing unit is specifically configured to determine the haptic evaluation indicator based on the application-layer parameter from the application server and/or the application-layer parameter from the terminal device, and the network-side parameter.

20. The apparatus according to claim 19, wherein the haptic evaluation indicator is obtained by performing weighted summation on a first value and/or a second value and a third value, the first value is a value obtained by inputting, into a first function, the application-layer parameter from the application server, the second value is a value obtained by inputting, into a second function, the application-layer parameter from the terminal device, and the third value is a value obtained by inputting the network-side parameter into a third function.

21. The apparatus according to any one of claims 14 to 18, wherein the target service comprises a haptic service and a video service, the network-side parameter comprises a network-side parameter corresponding to the haptic service and a network-side parameter corresponding to the video service, and the application-layer parameter further comprises video media information; and

the processing unit is further specifically configured to determine the haptic evaluation indicator based on the haptic information, the network-side parameter corresponding to the haptic service, the video media information, the network-side parameter corresponding to the video service, and a synchronization error between the haptic service and the video service.

22. The apparatus according to claim 21, wherein the haptic evaluation indicator is obtained by performing weighted summation on a fourth value, a fifth value, and the synchronization error, the fourth value is a value obtained by inputting, into a fourth function, the haptic information and the network-side parameter corresponding to the haptic service, and the fifth value is a value obtained by inputting, into a fifth function, the video information and the network-side parameter corresponding to the video service.

23. The apparatus according to any one of claims 14 to 18, wherein the processing unit is specifically configured to:
input the application-layer parameter and the network-side parameter into a trained neural network model, to obtain the haptic evaluation indicator.

24. The apparatus according to claim 23, wherein the processing unit is further specifically configured to:

collect, when the application-layer parameter of the target service is a different parameter and/or the network-side parameter of the target service is a different parameter, a plurality of scores of each of a plurality of users for the target service, and an application-layer parameter and/or a network-side parameter corresponding to each of the plurality of scores; and

input, into the neural network model by using the plurality of scores as tags, the application-layer parameter and/or the network-side parameter corresponding to each of the plurality of scores, and train the neural network model to obtain the trained neural network model.

25. The apparatus according to any one of claims 14 to 24, wherein the haptic information comprises at least one of the following:
vibration time, vibration intensity, haptic compressibility, key parameter for haptic coding, force feedback intensity, or interaction intensity.

26. The apparatus according to any one of claims 14 to 25, wherein the application-layer parameter further comprises the video media information, and the video media information comprises at least one of the following:
a frame rate, a periodicity, or information about a protocol data unit PDU set.

27. A haptic evaluation apparatus, comprising a processor and a memory communicatively connected to the processor, wherein

the memory stores computer-executable instructions; and
the processor executes the computer-executable instructions stored in the memory, to implement the method according to any one of claims 1 to 13.

28. A computer-readable storage medium, wherein the computer-readable storage medium stores computer-executable instructions, and when the computer-executable instructions are executed by a processor, the method according to any one of claims 1 to 13 is implemented.

29. A computer program product, wherein the computer program product comprises instructions, and when the instructions are run on a computer, the computer is enabled to implement the method according to any one of claims 1 to 13.

Communication system 100

Application server
110

Terminal device 140

Core network device
120

Access network
device 130

FIG. 1

200

N33 —— NEF

AF —— N5 —— PCF —— N7 —— SMF —— N11 —— AMF

N4

N2

N1

Application
server

DN —— N6 —— UPF —— N3 —— gNB —— Uu —— UE

FIG. 2

300

| Obtain an application-layer parameter and a network-side parameter of a target service, where the application-layer parameter includes haptic information of the target service, and the network-side parameter includes at least one of a delay, reliability, or jitter of the target service | S301 |

| Determine a haptic evaluation indicator of the target service based on the application-layer parameter and the network-side parameter, where the haptic evaluation indicator is used to evaluate quality of haptic experience of a user for the target service | S302 |

FIG. 3

400

| Application server | Core network device | Access network device | Terminal device |

S401: Third information

S402: First information

S403: Second information

S404: Determine a haptic evaluation indicator of a target service based on the first information, the second information, and a network-side parameter

FIG. 4

Apparatus 500

Obtaining unit 510

Processing unit 520

FIG. 5

Apparatus 600

Processor 610

Memory 630

Transceiver 620

FIG. 6

# EP 4 746 377 A1

## INTERNATIONAL SEARCH REPORT

| | International application No. |
|---|---|
| | **PCT/CN2024/112884** |

### A. CLASSIFICATION OF SUBJECT MATTER

H04L 65/80(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, VCN, VEN: 触觉, 用户体验, 评价, 业务, 质量, 参数, 时延, 振动, 模型, 训练, 指标, tactile, sensation, user experience, evaluation, business, quality, parameter, delay, vibration, model, train, indicator

### C. DOCUMENTS CONSIDERED TO BE RELEVANT

| Category* | Citation of document, with indication, where appropriate, of the relevant passages | Relevant to claim No. |
|---|---|---|
| X | CN 115955691 A (CHINA UNITED NETWORK COMMUNICATIONS GROUP CO., LTD.) 11 April 2023 (2023-04-11) description, paragraphs 64-163 | 1-29 |
| A | CN 113487148 A (CHINA UNITED NETWORK COMMUNICATIONS GROUP CO., LTD.) 08 October 2021 (2021-10-08) entire document | 1-29 |
| A | CN 116260741 A (CHINA UNITED NETWORK COMMUNICATIONS GROUP CO., LTD.) 13 June 2023 (2023-06-13) entire document | 1-29 |
| A | CN 106408035 A (SOUTHEAST UNIVERSITY) 15 February 2017 (2017-02-15) entire document | 1-29 |
| A | CN 113112163 A (AAC MICROTECH (CHANGZHOU) CO., LTD. et al.) 13 July 2021 (2021-07-13) entire document | 1-29 |
| A | WO 2023029894 A1 (HUAWEI TECHNOLOGIES CO., LTD.) 09 March 2023 (2023-03-09) entire document | 1-29 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2024** | **20 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/112884**

| Patent document cited in search report | | | Publication date (day/month/year) | Patent family member(s) | Publication date (day/month/year) |
|---|---|---|---|---|---|
| CN | 115955691 | A | 11 April 2023 | None | |
| CN | 113487148 | A | 08 October 2021 | None | |
| CN | 116260741 | A | 13 June 2023 | None | |
| CN | 106408035 | A | 15 February 2017 | None | |
| CN | 113112163 | A | 13 July 2021 | None | |
| WO | 2023029894 | A1 | 09 March 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311138992X